# FASCICULE DE BREVET EUROPEEN

(11) **EP 3 304 020 B1**
(45) Date de publication et mention de la délivrance du brevet: **24.04.2019**
(21) Numéro de dépôt: 16726570.1
(22) Date de dépôt: 01.06.2016
(51) Int. Cl.: G01L 15/00, G01L 9/00, G01L 19/14, G01L 19/06

(54) **DISPOSITIF DE DETECTION DE PRESSION**
DRUCKFÜHLER
PRESSURE SENSING DEVICE

(30) Priorité: 03.06.2015 FR 1555040
(43) Date de publication de la demande: 11.04.2018
(73) Titulaire: Safran Electronics & Defense, 92100 Boulogne-Billancourt (FR)
(72) Inventeur: RIOU, Jean-Christophe, 92100 Boulogne-Billancourt (FR); BAILLY, Eric, 92100 Boulogne-Billancourt (FR)
(74) Mandataire: Prouvez, Julien
(86) Numéro de dépôt international: PCT/EP2016/062416
(87) Numéro de publication internationale: WO 2016/193325

(56) Documents cités:
- US-A- 4 972 716
- US-A- 4 974 117
- US-A1- 2011 256 652
- US-B1- 6 431 003

## Description

### DOMAINE DE L'INVENTION

La présente invention concerne le domaine de la mesure de pression et plus particulièrement les capteurs électromécaniques de pression de fluide pour des applications aéronautiques, et notamment les capteurs de type MEMS.

### ARRIERE PLAN DE L'INVENTION

Un capteur de pression électromécanique comprend généralement une membrane en silicium ou en alliage de silicium sur la face avant de laquelle sont rapportées des jauges de déformation piézoélectriques montées en pont de Wheatstone et reliées à une unité électronique de traitement par des fils de connexion. La face arrière opposée à celle portant les jauges est soumise à une pression à mesurer qui, en déformant la membrane, sollicite les jauges et permet d'effectuer une mesure électrique de la pression. La membrane est généralement montée sur un substrat lui aussi en silicium. Le silicium étant particulièrement sensible aux attaques électrochimiques, la membrane est montée à une extrémité d'un conduit rempli d'un fluide de transfert, généralement de l'huile silicone. L'autre extrémité du conduit est fermée par une pastille en acier inoxydable dont la face extérieure est en contact avec le fluide dont la pression est à mesurer. La pression appliquée sur la pastille en acier inoxydable est transmise, par l'intermédiaire du fluide de transfert, à la membrane de silicium et mesurée par l'unité de traitement à partir des signaux fournis par les jauges de déformation. Le signal électrique engendré par l'unité de traitement est ensuite transmis à un réseau de communication.

Le capteur ainsi obtenu est généralement encombrant, lourd et couteux, notamment en raison de la présence du conduit rempli d'huile et des éléments d'étanchéité associés. En effet, l'huile doit être absolument incompressible, et de telles huiles sont chères et se figent à basse température au point de transmettre les vibrations. Dans les cas où elles ne sont pas totalement exemptes d'impuretés et/ou de radicaux libres, ces huiles sont génératrices de dérives électriques lorsqu'elles sont soumises à une tension électrique. Le remplissage du conduit cylindrique doit être effectué de manière extrêmement rigoureuse car la présence d'air dans le conduit rendrait le capteur imprécis, voire inopérant. Cette opération et son contrôle alourdissent les coûts de production du capteur. Enfin, un tel capteur est extrêmement sensible aux variations rapides de température du fluide dont la pression est à mesurer. En effet, bien que les capteurs piézoélectriques soient notoirement connus pour présenter une sensibilité réduite aux variations de température, les comportements du fluide de transfert et du conduit induisent des erreurs difficiles à compenser. Pour finir, à des températures extrêmement basses, le fluide de transfert peut figer et rendre le capteur inopérant.

Les documents US 6 431 003, US 2011 256652, US 4 972 716 et US 4 974 117 divulguent plusieurs capteurs de pression.

### OBJET DE L'INVENTION

L'objet de l'invention est de réduire le coût et la sensibilité thermique d'un capteur de pression électromécanique.

### RESUME DE L'INVENTION

A cet effet, on prévoit un dispositif de mesure de pression comprenant une platine portant un capteur de pression qui définit une première enceinte étanche avec une première face de la platine, la platine ayant une deuxième face en saillie de laquelle s'étend un pied de fixation. Le dispositif comprend également un premier canal s'étendant au moins dans le pied pour déboucher dans la première enceinte. Selon l'invention, le capteur de pression comprend un substrat ayant des faces opposées en regard desquelles s'étendent respectivement une première membrane déformable et une deuxième membrane déformable, la première membrane et la deuxième membrane s'étendant à distance du substrat en définissant avec celui-ci une deuxième enceinte étanche et une troisième enceinte étanche, le capteur de pression comprenant un couvercle s'étendant en regard de la deuxième membrane pour définir une quatrième enceinte étanche reliée par un deuxième canal à la première enceinte. Le capteur de pression comprend également des moyens de mesure de la déformation de la première et de la deuxième membrane déformable.

Les enceintes étanches sont destinées à contenir le fluide et à isoler les membranes de la pression du milieu extérieur. Le dispositif ainsi obtenu comprend un élément de mesure de pression directement soumis au fluide dont la pression doit être mesurée. L'absence d'huile de transfert permet d'obtenir un dispositif plus léger et moins coûteux à produire. L'application de la pression de part et d'autre du substrat permet d'équilibrer les efforts internes au substrat et améliore la linéarité et la précision du dispositif.

Selon un mode de réalisation particulièrement avantageux, les moyens de mesure de la déformation de la membrane comprennent un couple de premières électrodes s'étendant chacune sur une face du substrat et en regard desquelles s'étendent respectivement une deuxième électrode solidaire de la première membrane déformable et une troisième électrode solidaire de la deuxième membrane déformable. Il est alors possible de mesurer la déformation de la première et la deuxième membrane par mesure de la capacité des condensateurs à capacité variable ainsi constitués. La sensibilité des capteurs capacitifs aux variations thermiques est quasi nulle et le dispositif selon ce mode de réalisation ne requiert ainsi que peu ou pas de compensation en température.

Avantageusement, le deuxième canal s'étend au moins à travers un pourtour de la première membrane déformable, du substrat et de la deuxième membrane déformable. Le dispositif demeure compact et ne requiert pas de conduit externe pour amener la pression sur la deuxième membrane.

Selon un mode de réalisation particulier, le couvercle comprend une unité de traitement pour délivrer un signal électrique en fonction des distances séparant les premières électrodes de la deuxième et la troisième électrode. L'intégration de l'unité de traitement directement au dispositif de mesure permet d'obtenir un dispositif plus compact et limite les pontages qui peuvent être sources de défauts.

Avantageusement, les deuxième et troisième enceintes étanches sont à une pression absolue sensiblement nulle. Ceci permet de faciliter les opérations de calibrage du dispositif et autorise la réalisation de mesures de pression absolue.

Selon un autre mode de réalisation avantageux, la surface extérieure du dispositif comprend un revêtement en parylène qui permet de préserver le dispositif des agressions extérieures.

Avantageusement encore, la deuxième face de la platine est agencée pour coopérer avec des butées d'arrêt. Ainsi, la déformation du pied du dispositif sous des contraintes mécaniques est limitée à des valeurs admissibles, garantissant l'intégrité du dispositif.

D'autres caractéristiques et avantages de l'invention ressortiront à la lecture de la description qui suit de modes de réalisation particuliers et non limitatifs de l'invention.

### BREVE DESCRIPTION DES DESSINS

Il sera fait référence à l'unique figure qui est une vue schématique en coupe de l'invention.

### DESCRIPTION DETAILLEE DE L'INVENTION

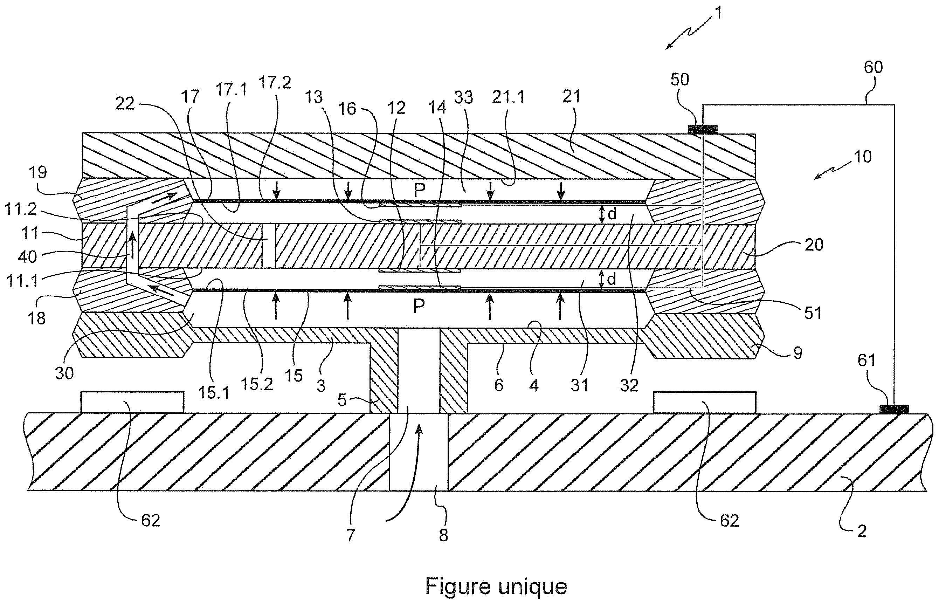

En référence à la figure 1, le dispositif de mesure de pression selon l'invention, généralement désigné 1, est monté sur un support 2 et comprend une platine 3 portant un capteur 10 de pression. Le capteur 10 définit une première enceinte 30 étanche avec une première face 4 de la platine 3. Un pied de fixation 5 s'étend en saillie d'une deuxième face 6 de la platine 3 opposée à sa première face 4 jusqu'au support 2. Un premier canal 7 s'étend dans le pied de fixation 5 depuis un orifice 8 traversant le support 2 pour déboucher dans la première enceinte 30.

Le capteur 10 comprend un substrat 11 en silicium ayant des faces 11.1 et 11.2 opposées pourvues chacune d'une première électrode 12 et 13 respectivement. Une deuxième électrode 14 solidaire de la première face 15.1 d'une première membrane 15 déformable s'étend en regard de la première électrode 12. Une troisième électrode 16 solidaire de la première face 17.1 d'une deuxième membrane 17 déformable s'étend, quant à elle, en regard de la première électrode 13. La première membrane 15 et la deuxième membrane 17 s'étendent à distance d du substrat 11.

La platine 3 ainsi que les membranes 15 et 17 comprennent respectivement un renflement annulaire périphérique 9, 18 et 19 présentant une portion plane de jonction en leurs parties supérieures et inférieures. Les renflements 9, 18 et 19 définissent ainsi respectivement les pourtours de la platine 3, de la membrane 15 et de la membrane 17. Le substrat 11 est sensiblement plan et comprend, quant à lui, une portion périphérique 20 qui définit son pourtour. Comme visible en figure 1, le substrat 11 est relié aux membranes 15 et 17 par assemblage des portions planes de leurs pourtours respectifs. La platine 3 est également reliée à la membrane 15 par assemblage de leurs pourtours respectifs.

Ainsi, la membrane 15 définit avec le substrat 11 une deuxième enceinte 31 étanche autour de la première électrode 12. Cette enceinte 31 est délimitée par le pourtour de la membrane 15, la face 15.1 de la membrane 15 et la face 11.1 du substrat 11.

De même, la membrane 17 définit avec le substrat 11 une troisième enceinte 32 étanche autour de la première électrode 13. Cette enceinte 32 est délimitée par le pourtour de la membrane 17, la face 17.1 de la membrane 17 et la face 11.2 du substrat 11.

Les enceintes 31 et 32 sont à une pression absolue sensiblement nulle et sont reliées entre elles par un conduit 22 traversant le substrat 11.

La première enceinte étanche 30 est, quant à elle, délimitée par les pourtours de la platine 3, de la membrane 15, la face 4 de la platine 3 et la face 15.2 de la membrane 15 opposée à la face 15.1.

Le capteur 10 comprend également un couvercle 21 plan qui s'étend en regard de la face 17.2 de la membrane 17 opposée à la face 17.1 et qui est relié sur son pourtour à la portion supérieure du renflement 19 de la membrane 17. Le couvercle 21 définit avec la membrane 17 une quatrième enceinte étanche 33 délimitée par le pourtour 19, la face inférieure 21.1 du couvercle 21 et la face 17.1 de la membrane 17. Un deuxième canal 40 reliant fluidiquement la première enceinte 30 et la quatrième enceinte 33 s'étend au travers des pourtours respectifs de la première membrane 15, du substrat 11 et de la deuxième membrane 17. Ainsi les enceintes 30 et 33 sont à la même pression P.

Le couvercle 21 comprend une unité de traitement 50 reliée via des fils conducteurs 51 aux électrodes 12, 13, 14 et 16. L'unité de traitement 50, ici un circuit intégré de type ASIC (de l'anglais « Application Specific Integrated Circuit », est agencée pour délivrer un signal électrique en fonction des distances séparant les premières électrodes 12 et 13 de la deuxième électrode 14 et de la troisième électrode 15. Les fils conducteurs 51 traversent ici les pourtours des membranes 15, 17 et du substrat 11 ainsi que le couvercle 21. L'unité de traitement 50 peut être reliée, par exemple à l'aide d'un fil conducteur 60 à un plot 61 solidaire du support 2.

En fonctionnement, le fluide dont la pression doit être mesurée (qui est un gaz et par exemple un gaz neutre ou de l'air) occupe le canal 7 (via l'orifice 8), la première enceinte 30, le canal 40, et l'enceinte 33. Sous l'effet de la pression P, les membranes 15 et 17 se déforment et les distances séparant les premières électrodes 12 et 13 respectivement des deuxième et troisième électrodes 14 et 16 varient. Les capacités des condensateurs formés par les couples d'électrodes 12/14 et 13/16 sont alors modifiées et transmises à l'unité de traitement 50 via les fils conducteurs 51. L'unité de traitement 50 convertit alors ces valeurs en signaux électriques qu'elle transmet à l'aide d'un fil conducteur 60 à un circuit relié au plot 61.

Le dispositif 1 reçoit avantageusement sur sa surface extérieure et/ou sur les parois des enceintes 30 et 33 un revêtement en parylène afin d'en prolonger la longévité notamment ou dans le cas où les fluides dont la pression est à mesurer sont particulièrement agressifs.

Les revêtements carbonés de type DLC - de l'anglais « Diamond Like Carbon »- sont également adaptés à la protection des surfaces extérieures du capteur et/ou des parois des enceintes 30 et 33.

La deuxième face 4.1 de la platine 3 est ici agencée pour coopérer avec des butées d'arrêt 62 positionnées sur le support 2.

Au sens de la présente demande, le terme électrode désigne tout élément électriquement conducteur. Il couvre alors un élément rapporté sur un substrat ou une membrane ainsi qu'une portion de substrat ou de membrane (voire son intégralité) disposant des propriétés électriques lui permettant de définir une électrode de condensateur. Une membrane en céramique est donc une électrode au sens de la présente demande.

Bien entendu, l'invention n'est pas limitée au mode de réalisation décrit mais englobe toute variante entrant dans le champ de l'invention telle que définie par les revendications.

En particulier :
- bien qu'ici le dispositif ait sensiblement la forme d'un cylindrique droit à section circulaire, l'invention s'applique également à d'autres formes de dispositifs comme par exemple un dispositif cylindrique de courbe directrice carrée ou rectangulaire, ou encore un dispositif sphérique ;
- bien qu'ici le substrat du capteur soit en silicium, l'invention s'applique également à d'autres types de substrat comme par exemple un substrat en alliage de silicium, en céramique multicouches à cuisson simultanée à haute température (HTCC) ou en céramique multicouches à cuisson simultanée à basse température (LTCC) ;
- bien qu'ici les première et deuxième membranes s'étendent à des distances identiques des faces du substrat, l'invention s'applique également à des membranes s'étendant à des distances différentes des faces du substrat ;
- bien qu'ici le pourtour des membranes et du support soient définis par un renflement annulaire, l'invention s'applique également à d'autres types de pourtours comme par exemple une paroi de section rectangulaire ou des entretoises périphériques collés au support, au substrat et/ou aux membranes ;
- bien qu'ici le couvercle soit plan, l'invention s'applique également à d'autres formes de couvercle comme par exemple un couvercle en forme de dôme hémisphérique ;
- bien qu'ici le deuxième canal s'étende au travers des pourtours respectifs des membranes et du substrat, l'invention s'applique également à d'autre configuration du deuxième canal, comme par exemple un conduit extérieur reliant la première et la quatrième chambre, ou un conduit intérieur ou extérieur reliant le premier canal à la quatrième chambre ;
- bien qu'ici, l'unité de traitement soit un ASIC solidaire du couvercle, l'invention s'applique également à d'autres moyens de traitement comme par exemple un microcontrôleur, celui-ci pouvant être situé sur le support ou sur un autre élément ;
- bien qu'ici, les électrodes soient reliées à l'unité de traitement par des fils conducteurs traversant les pourtours des membranes et du substrat, l'invention s'applique également à d'autres moyens de raccordement pouvant comprendre par exemple des fils conducteurs extérieurs au capteur, ou des pistes conductrices imprimées sur le capteur ;
- bien qu'ici la mesure de la déformation des membranes soit réalisée par mesure de la distance séparant des électrodes (capteur de type capacitif), l'invention s'applique également à d'autres moyens de mesure de la déformation des membranes comme par exemple un ou plusieurs éléments piézoélectriques comme ceux des capteurs de type piézorésistif, piézoélectrique ou résonant.

## Revendications

1. Dispositif de mesure de pression (1) comprenant une platine (3) portant un capteur de pression (10) qui définit une première enceinte étanche (30) avec une première face (4) de la platine (3), la platine (3) ayant une deuxième face (6) en saillie de laquelle s'étend un pied de fixation (5), un premier canal (7) s'étendant au moins dans le pied (5) pour déboucher dans la première enceinte (30),
**caractérisé en ce que**:
le capteur de pression (10) comprenant un substrat (11) ayant des faces (11.1, 11.2) opposées en regard desquelles s'étendent respectivement une première membrane déformable (15) et une deuxième membrane déformable (17), la première membrane (15) et la deuxième membrane (17) s'étendant à distance du substrat (11) en définissant avec celui-ci une deuxième enceinte étanche (31) et une troisième enceinte étanche (32), la première membrane (15) définissant également la première enceinte étanche (30), le capteur de pression (10) comprenant un couvercle (21) s'étendant en regard de la deuxième membrane (17) pour définir une quatrième enceinte étanche (33) reliée par un deuxième canal (40) à la première enceinte (30), le capteur de pression (10) comprenant des moyens de mesure (12, 13, 14, 16) de la déformation de la première (15) et de la deuxième (17) membrane déformable.

2. Dispositif (1) selon la revendication 1, dans lequel les moyens de mesure de la déformation de la membrane comprennent un couple de premières électrodes (12, 13) s'étendant chacune sur une face du substrat et en regard desquelles s'étendent respectivement une deuxième électrode (14) solidaire de la première membrane déformable (15) et une troisième électrode (16) solidaire de la deuxième membrane déformable (17).

3. Dispositif (1) selon la revendication 1, dans lequel le deuxième canal (40) s'étend à travers un pourtour de la première membrane déformable (15), du substrat (11) et de la deuxième membrane déformable (17).

4. Dispositif (1) selon la revendication 1, dans lequel le couvercle (21) comprend une unité de traitement (50) pour délivrer un signal électrique en fonction des distances séparant les premières électrodes (12, 13) de la deuxième (14) et la troisième (16) électrode.

5. Dispositif (1) selon la revendication 1 dans lequel les deuxième (31) et troisième (32) enceintes étanches sont à une pression absolue sensiblement nulle.

6. Dispositif (1) selon la revendication 1, dans lequel la surface extérieure du dispositif (1) comprend un revêtement en parylène.

7. Dispositif (1) selon la revendication 1, dans lequel la surface extérieure du dispositif (1) comprend un revêtement carboné de type DLC.

8. Dispositif (1) selon la revendication 1, dans lequel la deuxième face (6) de la platine (3) est agencée pour coopérer avec des butées d'arrêt (62).

9. Dispositif (1) selon la revendication 1, dans lequel la platine (3) et les membranes (15, 17) comprennent un renflement annulaire périphérique (9, 18, 19) présentant une portion plane de jonction en leurs parties supérieures et inférieures, le substrat (11) étant relié aux membranes (15, 17) par assemblage des portions planes de leurs pourtours respectifs et la platine (3) étant reliée à la première membrane (15) par assemblage de leurs pourtours respectifs.

## Patentansprüche

1. Druckmessvorrichtung (1), umfassend eine Platine (3), die einen Drucksensor (10) trägt, der eine erste dichte Einfassung (30) mit einer ersten Fläche (4) der Platine (3) definiert, wobei die Platine (3) eine zweite Fläche (6) hat, von der ein Befestigungsfuß (5) absteht, wobei sich ein erster Kanal (7) zumindest in dem Fuß (5) erstreckt, um in der ersten Einfassung (30) zu münden,
**dadurch gekennzeichnet, dass**:
der Drucksensor (10) ein Substrat (11) umfasst, das entgegengesetzte Flächen (11.1, 11.2) hat, gegenüber denen sich eine erste verformbare Membran (15) bzw. eine zweite verformbare Membran (17) erstreckt, wobei sich die erste Membran (15) und die zweite Membran (17) mit Abstand zum Substrat (11) erstrecken und dabei mit diesem eine zweite dichte Einfassung (31) und eine dritte dichte Einfassung (32) definieren, wobei die erste Membran (15) ebenfalls die erste dichte Einfassung (30) definiert, wobei der Drucksensor (10) eine Abdeckung (21) umfasst, die sich gegenüber der zweiten Membran (17) erstreckt, um eine vierte dichte Einfassung (33) zu definieren, die über einen zweiten Kanal (40) mit der ersten Einfassung (30) verbunden ist, wobei der Drucksensor (10) Messmittel (12, 13, 14, 16) zum Messen der Verformung der ersten verformbaren Membran (15) und der zweiten verformbaren Membran (17) umfasst.

2. Vorrichtung (1) nach Anspruch 1, bei der die Messmittel zum Messen der Verformung der Membran ein Paar von ersten Elektroden (12, 13) umfassen, die sich jeweils auf einer Fläche des Substrats erstrecken und denen gegenüber sich eine zweite Elektrode (14) erstreckt, die fest mit der ersten verformbaren Membran (15) verbunden ist, bzw. eine dritte Elektrode (16), die fest mit der zweiten verformbaren Membran (17) verbunden ist.

3. Vorrichtung (1) nach Anspruch 1, bei der sich der zweite Kanal (40) durch einen Umfang der ersten verformbaren Membran (15), des Substrats (11) und der zweiten verformbaren Membran (17) erstreckt.

4. Vorrichtung (1) nach Anspruch 1, bei der die Abdeckung (21) eine Verarbeitungseinheit (50) umfasst, um ein elektrisches Signal in Abhängigkeit von Abständen zu liefern, die die ersten Elektroden (12, 13) von der zweiten Elektrode (14) und der dritten Elektrode (16) trennen.

5. Vorrichtung (1) nach Anspruch 1, bei der die zweite dichte Einfassung (31) und die dritte dichte Einfassung (32) einen Absolutdruck von im Wesentlichen Null haben.

6. Vorrichtung (1) nach Anspruch 1, bei der die Außenfläche der Vorrichtung (1) eine Parylene-Beschichtung umfasst.

7. Vorrichtung (1) nach Anspruch 1, bei der die Außenfläche der Vorrichtung (1) eine Kohlenstoffbeschichtung vom Typ DLC umfasst.

8. Vorrichtung (1) nach Anspruch 1, bei der die zweite Fläche (6) der Platine (3) ausgebildet ist, um mit Stoppanschlägen (62) zusammenzuwirken.

9. Vorrichtung (1) nach Anspruch 1, bei der die Platine (3) und die Membranen (15, 17) eine ringförmige Umfangswulst (9, 18, 19) umfassen, die einen ebenen Verbindungsabschnitt auf ihrer Oberseite und ihrer Unterseite aufweist, wobei das Substrat (11) mit den Membranen (15, 17) durch Zusammenfügen der ebenen Abschnitte ihrer jeweiligen Umfänge verbunden wird und die Platine (3) mit der ersten Membran (15) durch Zusammenfügen ihrer jeweiligen Umfänge verbunden wird.

## Claims

1. A pressure measuring device (1) comprising a bracket (3) supporting a pressure sensor (10) which defines a first sealed enclosure (30) with a first face (4) of the bracket (3), with the bracket (3) having a second face (6) from which a mounting foot (5) protrudes, with a first channel (7) extending at least into the foot (5) to open into the first enclosure (30),
**characterized in that** :
the pressure measuring device (10) comprising a substrate (11) having opposite faces (11.1, 11.2), opposite which a first deformable membrane (15) and a second deformable membrane (17) respectively extend, with the first membrane (15) and the second membrane (17) extending at a distance from the substrate (11) while defining therewith a second sealed enclosure (31) and a third sealed membrane (32), the first membrane (15) defining also the first sealed enclosure (30), the pressure sensor (10) comprising a cover (21) extending opposite the second membrane (17) in order to define a fourth sealed enclosure (33) connected through a second channel (40) to the first enclosure (30), with the pressure sensor (10) comprising means (12, 13, 14, 16) for measuring the deformation of the first (15) and the second deformable membranes (17).

2. A device (1) according to claim 1, wherein the means for measuring the deformation of the membrane comprise a pair of first electrodes (12, 13) each extending on one face of the substrate and opposite which a second electrode (14) integral with the first deformable membrane (15) and a third electrode (16) integral with the second deformable membrane (17) respectively extend.

3. A device (1) according to claim 1, wherein the second channel (40) extends through a periphery of the first deformable membrane (15) of the substrate (11) and of the second deformable membrane (17).

4. A device (1) according to claim 1, wherein the cover (21) comprises a processing unit (50) for delivering an electric signal according to the distances from the first electrodes (12, 13) to the second (14) and the third (16) electrodes.

5. A device (1) according to claim 1, wherein the second (31) and third (32) sealed enclosures have a substantially null absolute pressure.

6. A device (1) according to claim 1, wherein the outer surface of the device (1) comprises a parylene coating.

7. A device (1) according to claim 1, wherein the outer surface of the device (1) comprises a carbon coating of the DLC type.

8. A device (1) according to claim 1, wherein the second face (6) of the bracket (3) is so arranged as to cooperate with end stops (62).

9. A device (1) according to claim 1, wherein the bracket (3) and the membranes (15, 17) comprise a peripheral annular bulge (9, 18, 19) having a flat junction portion at their upper and lower parts, with the substrate (11) being connected to the membranes (15, 17) by assembling flat portions of the respective periphery thereof and the bracket (3) being connected with the first membrane (15) by assembling the respective periphery thereof.
